# EUROPEAN PATENT SPECIFICATION

(11) **EP 2 350 687 B1**
(45) Date of publication and mention of the grant of the patent: **17.10.2012**
(21) Application number: 09747913.3
(22) Date of filing: 03.11.2009
(51) Int. Cl.: G01S 17/74, G02B 5/126

(54) **IDENTIFICATION DEVICE**
IDENTIFIKATIONSEINRICHTUNG
DISPOSITIF D'IDENTIFICATION

(30) Priority: 13.11.2008 GB 0820796; 13.11.2008 EP 08275072
(43) Date of publication of application: 03.08.2011
(73) Proprietor: BAE Systems PLC, London SW1Y 5AD (GB)
(72) Inventor: LAYCOCK, Leslie,Charles, Chelmsford Essex CM2 8HN (GB); GRIFFITH, Michael, Stewart, Chelmsford Essex CM2 8HN (GB); McARDLE, Hywel John, Chelmsford Essex CM2 8HN (GB)
(74) Representative: Alpass, James Hampden
(86) International application number: PCT/GB2009/051475
(87) International publication number: WO 2010/055325

(56) References cited:
- WO-A-2005/041450
- US-A- 3 493 294
- US-A- 6 115 168
- US-A1- 2004 075 880

## Description

This invention relates to an identification device.

Identification devices can be provided on or fixed relative to items, products or other objects, so that the objects can be identified by a detection unit. Identification devices are known which can be identified by irradiation from a detection unit, such that a return signal from the device can be identified by the detection unit. However, such prior art devices cannot be controlled to provide a return signal only in selected circumstances, for instance, if it is desired to allow identification of only a selected type of objects by the detection unit or if it is desired to allow identification only by a selected detection unit.

The present invention provides an identification device comprising a retroreflector for receiving an incident beam of radiation from a detection unit remote from the device and selectively retroreflecting the incident beam back to the detection unit, the retroflector comprising: a substantially spherical graded refractive index lens; a reflective part for reflecting the incident beam of radiation passing through the lens; and wherein, in use, in a first condition of the retroreflector, the lens and the reflective part are located relative to each other so that the incident beam of radiation is retroreflected back to the detection unit, and in a second condition of the retroreflector, the lens and the reflective part are located relative to each other so that the reflected beam diverges; said device further comprising a control unit for controlling the condition of the retroreflector.

In order that the present invention may be well understood, embodiments thereof, which are given by way of example only, will now be described in greater detail, with reference to the accompanying drawings, in which:
Figure 1 is a schematic representation of an identification device in a first condition;
Figure 2 is a schematic representation of the identification device shown in Figure 1 in a second condition;
Figure 3 shows the retroreflector of the identification device in the first condition;
Figures 4 and 5 show the retroreflector of the identification device in the second condition; and
Figure 6 shows a detection unit for identifying the identification device.

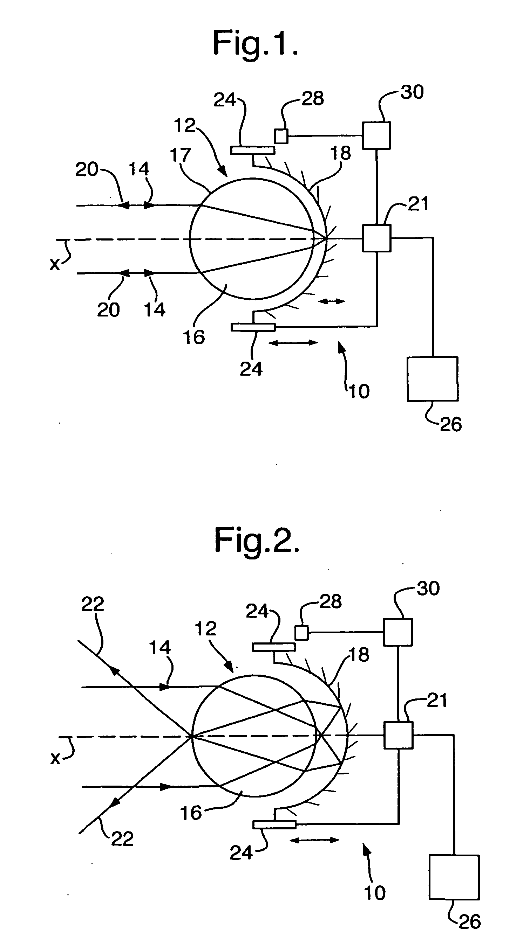

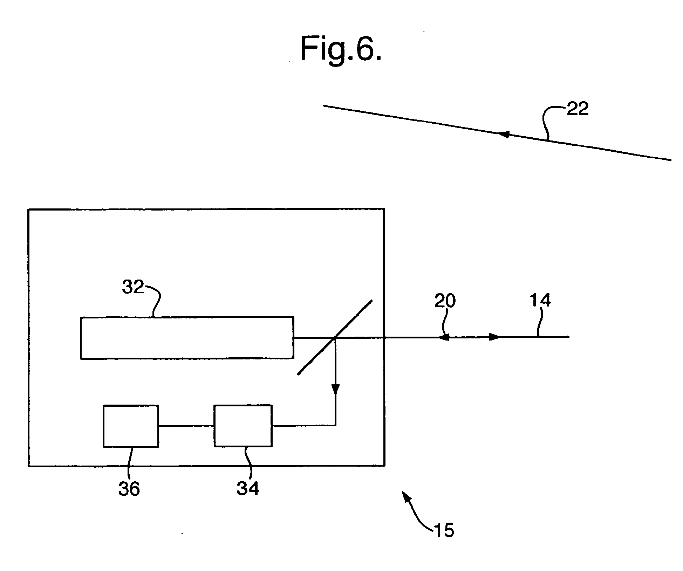

An identification device 10 is shown in Figures 1 and 2. The device 10 comprises a retroreflector 12 for receiving an incident beam of radiation 14 from a detection unit 15 (see Figure 6) remote from the device and selectively retroreflecting the incident beam back to the detection unit.

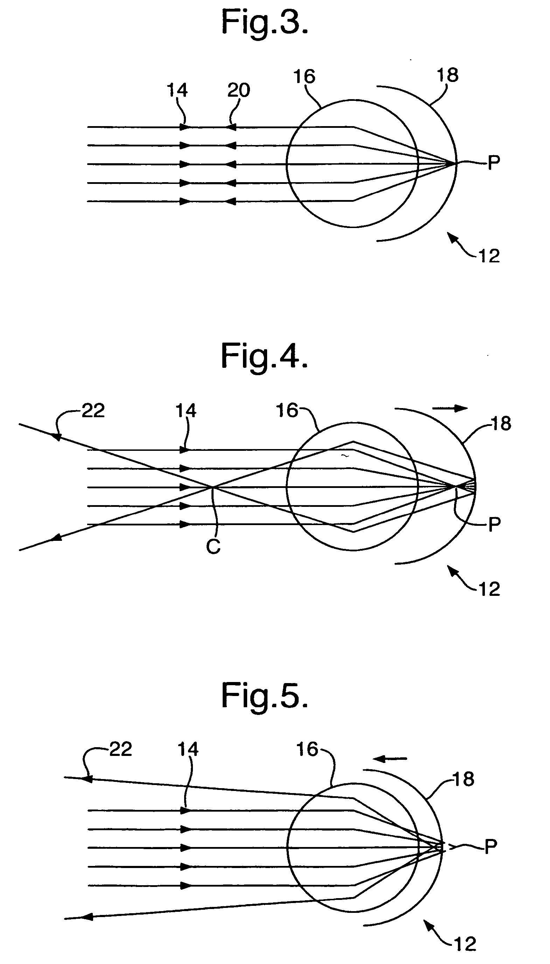

The retroflector 12 comprises a substantially spherical graded refractive index lens 16 and a reflective part 18 for reflecting the incident beam of radiation passing through the lens. In a first condition, or mode, of the retroreflector shown in Figure 1, the lens 16 and the reflective part 18 are located relative to each other so that the incident beam of radiation 14 is retroreflected back to the detection unit. The retroreflected beam of radiation 20 is indicated by the arrows in showing propogation of the wave in a parallel but opposing direction to the incident beam 14. In a second quiescent condition, or mode, of the retroreflector 12 shown in Figure 2, the lens 16 and the reflective part 18 are located relative to each other so that the reflected beam of radiation 22 diverges. As described in greater detail with reference to Figures 3 to 5, the detection unit does not receive the reflected beam, or the reflected beam is too weak, to enable identification of the identification device 10.

The detection unit may be configured such that an identification is made only if the intensity of radiation received is above a threshold, for instance, to distinguish clearly from background radiation which may also be detected by the detection unit. In such a configuration of the detection unit, the identification device causes the intensity of radiation retroreflected back to the detection unit to be higher than the threshold in the first condition and the intensity of radiation received in the second condition to be below the threshold.

The detection unit 15 as shown in Figure 6 can be any source of radiation, but preferably it is a source of collimated visible or near visible electro-magnetic radiation which can be considered to be located at infinity for the present purposes so that a plane wave is generated (e.g. at a distance greater than about 5 metres, although distances of many kilometres may be adopted in practice). A source of laser light is suitable.

The device 10 further comprises a control unit 21 for controlling the condition of the retroreflector, as described in more detail below.

A known retroreflector employs glass spheres, or cemented hemispheres, in order to provide retroreflection for paraxial incident rays. Such devices can be made very small (for example with sub-millimetre diameters) and offer a very wide field of view, including a complete hemisphere or more in a single component. Furthermore, single spheres can be manufactured in quantity at low cost.

GRIN lenses avoid some of the disadvantages with spherical lenses having constant refractive index. The main disadvantage is that the reflected radiation is subject to severe spherical aberration for non-paraxial rays, and this can strongly reduce the far-field intensity of the reflected beam measured on-axis. It also leads to significant beam divergence, making the reflection visible far from the axis, which can be undesirable in some applications, for example in free-space communication where privacy is desired.

A GRIN lens exhibits gradual variations in refractive index through its volume. An example is the so-called "GRIN-rod" lens, which is a graded-index lens with cylindrical symmetry and radial parabolic index distribution. See S. Nemoto and J. Kida, 'Retroreflector using gradient-index rods' Appl. Opt. 30(7), 1 Mar 1991, p.815-822.

Sphere lenses with refractive index distributions possessing spherical symmetry are known as 'GRIN-sphere' lenses, having a spherically symmetric refractive index distribution in which the refractive index varies gradually across a radial cross-section. Such lenses are known to exhibit improved spherical aberration compared to uniform sphere lenses. See Y. Koike, A. Kanemitsu, Y. Shioda, E. Nihei and Y. Ohtsuka, 'Spherical gradient-index polymer lens with low spherical aberration' Appl. Opt. 33(17), 1 Jun 1994, p. 3394-3400.

Referring to Figure 1, the GRIN-sphere lens 16 has a mechanical surface, shown as a solid circle 17. The incident beam of radiation 14 passes through a first hemisphere of the lens. In order to improve the optical characteristics of the retroreflector, the lens is clad in, or otherwise coated with, a transparent material (not shown) having a uniform refractive index of a particular, desired value. The transparent material has a uniform thickness, and has an outer spherical surface which is arranged concentric with the outer surface of the lens. The surface of the transparent material forms the entrance face of the device. Although not shown in Figure 1, the entrance face of the transparent material may be provided with an anti-reflective coating, applied in any convenient manner.

The reflective part 18 covers an outer surface of the lens on the side opposite the entrance face, to provide retroreflection of the incident rays 14 as shown. For optimum field of view, the reflective part 22 covers approximately a hemisphere on the outer surface.

The lens 16 may be made of suitable polymer materials, such as benzyl methacrylate or similar materials, or glass. The desired refractive index distribution may be obtained by any known technique, such as diffusion of suitable materials within the sphere, or photo-inscription in photosensitive material using, for example, ultra-violet sources.

The transparent material may be made of a suitable plastic, for example polymethyl methacrylate, or glass.

The reflective part 18 may be metallic, for example aluminium, to provide broad spectral reflection.

The retroreflector 12 reflects radiation back to the detection unit in a direction parallel with and opposite to the direction of propagation of the incident beam 14, with a minimum scattering of radiation. The arrangement of the lens 16 and the hemi-spherical reflecting part 18 is capable of reflecting radiation over a wide range of viewing angles, or angles of incidence, unlike a planar mirror which would reflect radiation only if the plane of the mirror is exactly perpendicular to the wave front, having a zero angle of incidence. Accordingly, the identification device 10 of the embodiments can be irradiated by the detection unit from any one of a plurality of angles and can still reflect the incident beam 14 back to the detection unit.

The device 10 comprises means 24 for moving the lens 16 and the reflective part 18 relative to each other between the first condition and the second condition in response to a control signal received from the control unit 21. The moving means 24 is capable of causing reciprocating relative movement of said lens and said reflective part along a central axis X common to said lens and said reflective part. The moving means may comprise a motor and track on which the reflective part is mounted for causing reciprocating movement of the reflective surface between the first condition and second condition of the retroreflector. Alternatively, the material of the reflective part may move or change shape in response to an electric current. The reflective part could be moved by an electromagnetic moving coil arrangement (eg loudspeaker mechanism), or by piezoelectric actuators, or the shape of the mirror could be changed (eg a bimorph deformable mirror). It should be noted that for incident light at large angles, the relative movement would be less (x cos(angle)) for a spherical reflector, and the moving mechanism must provide some degree of displacement component at larger angles.

Figures 3 to 5 show the retroreflector 12 in the first condition and the second condition. In Figure 3, the retroreflector 12 is in the first condition and the lens 16 and reflecting part 18 are located relative to each other so that the incident beam of radiation 14 is retroreflected back to the detection unit as indicated by retroreflected beam 20. As shown, the reflective part 18 has a hemi-spherical reflective surface in focus with the lens. In this way, radiation emitted from a detection unit from any one of a plurality of different viewing angles with respect to the identification device passes through the lens, is focussed at the reflecting part and retroreflected back to the detection unit. The focal point in the example shown in Figures 3 to 5 is indicated by P.

In Figure 4, the reflecting part 18 is out of focus with the lens as the reflecting part has been moved away from the lens 16. The amount of movement has been exaggerated in Figure 4 and may be as little as a fraction of a millimetre for instance about 0.1mm. Preferably, the reflecting part is moved by about 1 mm, although the exact amount of movement required is dependent on the size, wavelength of radiation, gradient of the lens and other parameters.

In Figure 4 the reflecting part is located away from, or behind, the focal point P, which remains in the same position as in Figure 3. Accordingly, the beam of radiation has passed through point P and is diverging when it strikes the reflecting part. When it is reflected and subsequently refracted by the lens, it converges at point C and thereafter, the reflected beam 22 diverges away from the position of the detection unit.

In Figure 5, the reflecting part 18 has been moved out of focus with the lens by movement towards the lens 16. As with Figure 4, the amount of movement has been exaggerated and may be as little as a fraction of a millimetre for instance about 0.1mm. Preferably, the reflecting part is moved by about 1 mm, although the exact amount of movement required is dependent on the size, wavelength of radiation, grading of the lens and other parameters.

In Figure 5 the reflecting part is located away from, or in front of, the focal point P, which remains in the same position as in Figure 3. Accordingly, the beam of radiation is not focussed at point P, which would be behind the lens. When the beam is reflected and subsequently refracted by the lens, it diverges away from the position of the detection unit as shown by 22.

Accordingly, movement of the reflecting part towards or away from the lens, out of focus with the lens, causes the reflected beam to be directed away from the detection unit. The invention is however not restricted to such movement. The reflecting part could for example be pivoted or bent out of focus. Alternatively, the lens could be moved instead of the reflecting part, or both parts could be moved. Whilst such other types of movement are within the scope of the invention, the remainder of this description will discuss the embodiments in terms of movement of the reflecting part.

It will also be appreciated that that part of the wave front which passes along line X shown in Figures 1 and 2 would strike the reflecting part and be reflected back along line X to the detection unit, regardless of the relative position of the reflecting part. However, in general such reflected radiation along or close to line X is minimal and is either not sufficient to be identified by the detection unit against background noise or below the threshold at which the detection unit makes a determination that a returned signal has been received.

The amount of mirror movement depends on the required signal which can be received and identified by the detection unit. If the detection unit is very sensitive, the identification device, in the second condition, must prevent anything but minimal amounts of reflected radiation being received by the detection unit. For the simple, on-axis solution, moving the mirror away from the focus of the sphere lens increases the size of a return signal spot at the detection unit by increasing the divergence angle. The distance between the detection unit and the identification device also affects the required divergence angle. For example, with a lens which has a focal length of approximately 17.9 mm and a radius close to 12.7 mm and index of the outer cladding of 1.505, the following results in Table 1 were established. For simplicity, the input beam has been limited to the central -8% of the lens' diameter. The results show the movement of the reflective part towards the lens as shown in Figure 5 in mm and distance from the detection unit in meters.

**Table 1**

| | **0.01 mm** | **0.05mm** | **0.1mm** | **0.5mm** |
|---|---|---|---|---|
| **10m** | 1:1 | 24:1 | 97:1 | 2476:1 |
| **20m** | 4:1 | 96:1 | 3 86:1 | 9905:1 |
| **50m** | 24:1 | 601:1 | 2414:1 | 62,000:1 |
| **100m** | 96:1 | 2405:1 | 9657:1 | 250,000:1 |
| **500m** | 2405:1 | 60,000:1 | 240,000:1 | 6,200,000:1 |

These results show that strength of signal received by the detection unit decreases very rapidly with range. Even over very short ranges, a considerable decrease can be achieved with a modest mirror movement e.g. when the mirror is moved 0.1 mm towards the lens, there is a ~100:1 decrease at 10 m. The results shown above are all for moving the mirror towards the lens. Moving the mirror away from the lens as shown in Table 2, past the focal point of the GRIN lens makes the reflected beam converge. Beyond the focal point, a converging beam will start diverging.

**Table 2**

| | **+0.01mm** | **+0.05mm** | **+0.1mm** | **+0.5mm** |
|---|---|---|---|---|
| **10m** | 1:1 | 24:1 | 95:1 | 2322:1 |
| **20m** | 4:1 | 96:1 | 381:1 | 9288:1 |
| **50m** | 24:1 | 597:1 | 2382:1 | 58,000:1 |
| **100m** | 96:1 | 2391:1 | 9531:1 | 230,000:1 |
| **500m** | 2395:1 | 60,000:1 | 238,000:1 | 5,800,000:1 |

Table 2 shows the results for movement of the reflecting part away from the lens.

The detection unit 15 may be configured so that if it receives an amount of radiation above a predetermined threshold, say 100:1, an authentic determination is made and if it receives an amount of radiation below that threshold, an authentic determination is not made. Accordingly, the identification device is configured so that in the first condition of the retroreflector the lens and the reflecting part are located relative to each other so that the amount of radiation retroreflected back to the detection unit is above the threshold and in the second condition of the retroreflector the lens and the reflecting part are located relative to each other so that the amount of radiation reflected back to the detection unit is below the threshold.

Movement of the reflecting part 18 can be initiated manually or automatically, for example in response to a detected characteristic of the incident beam. A user interface 26 is connected to the control unit 21 for receiving a control command from a user for controlling the condition of the retroreflector 12. For instance, a user may wish to place one or more identification devices in a receptive state for identification by the detection unit.

Additionally, or alternatively, the identification device 10 may comprise a detector 28 for detecting a characteristic of an incident beam of radiation 14 received by the identification device. For instance, the detector 28 may be adapted to detect the wavelength of a beam of radiation. Alternatively, the detector 28 may be adapted to detect a modulated signal carried by the incident beam of radiation. The detector 28 in one embodiment may comprise a lens and an image-sensor for converting an optical signal to an electrical signal. Alternatively, the detector may comprise an RF antenna and a demodulator. The detector is adapted to detect a characteristic emitted by the detection unit.

The detector 28 is connected to a decoder 30 for decoding the characteristic of the incident beam detected by the detector and determining if said characteristic is authentic. For instance, if the characteristic is the wavelength of the incident beam of radiation, the decoder 30 determines if the wavelength is a predetermined wavelength and if this is the case, outputs a positive, or authentic, determination. The decoder 30 may comprise a comparator for comparing a first signal output from the detector with a stored value.

The decoder 30 generates an authentication signal if the characteristic is authentic. The control unit 21 is connected to the decoder 30 and responds to the authentication signal by causing the retroreflector 12 to adopt the first condition. The default condition of the retroreflector 12 is the second, quiescent, condition. In this regard, the reflecting part 18 may be mechanically biased to take up a position in which it is not in focus with the lens 16. In the absence of an authentication signal, the retroreflector adopts the second condition as shown in Figures 2, 4 or 5.

Referring to Figure 6, the detection unit 15 comprises a radiation source 32 for generating the incident beam of radiation 14 and directing it towards the identification device 10. The radiation may be a source of laser radiation. The incident beam of radiation is transmitted through a component 34 which allows passage of the incident beam of radiation therethrough but reflects a retroreflected beam 20 from the identification device 10. The retroreflected beam is subsequently passed to a filter 34 and decoder 36 for identification. The diverging reflected beam 22 reflected from the identification device 10 when in its second condition is not received by the detection unit 15, or at least is not received by the detection unit with sufficient intensity for identification - see tables 1 and 2 above.

In use, one or more identification devices 10 are fixed relative to or attached to one or more objects which the detection unit may wish to identify. The identification devices may be adapted to respond to different characteristics so that objects or types of objects may be selectively identifiable by the detection unit. For instance, selected identification devices may be adapted to retroreflect when receiving an incident beam of radiation in the ultraviolet waveband, whereas other selected identification devices may be adapted to retroreflect when receiving an incident beam of radiation in the infrared waveband.

An operator at the detection unit may wish to identify, or locate, objects in a first category fixed relative to an identification device which is responsive to irradiation in the ultraviolet waveband. The operator operates the detection unit 15 so that it emits an incident beam or radiation 14. The detection unit 15 may additionally be operated to sweep the incident beam over a wide sector. Each identification device 10 in range and at a suitable viewing angle receives the incident beam at detector 28. The detector detects the wavelength of the incident beam of radiation and outputs the wavelength to the decoder 30. The decoder 30 compares the wavelength with a stored value. If the stored value equates to a UV wavelength, an authentic determination is made and output to control unit 21. Control unit 21 causes the retroreflector to move from its default second condition to the first condition. When in the first condition, the incident beam of radiation 14 is retroreflected back to the detection unit where it is filtered and decoded thereby allowing the detection unit to identify the identification device.

If the decoder 30 of the identification stores a value in the infrared waveband, the decoder does not output an authentication signal to control unit 21 and the retroreflector remains in the default second condition. Subsequently, the incident beam of radiation is caused to diverge away from the detection unit so that the detection unit cannot identify the identification device.

Alternatively, the detection unit may comprise an RF transmitter and the identification device may comprise an RF receiver. In this way, the detection unit can transmit a coded signal to one or more selected identification devices instructing them to adopt the second condition of the retroreflector. Subsequently, the detection unit can irradiate the identification devices and only those identification devices which have previously responded to the RF signal retroreflect the incident beam of radiation 14 back to the detection unit.

The above embodiments are to be understood as illustrative examples of the invention. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. An identification device comprising a retroreflector for receiving an incident beam of radiation from a detection unit remote from the device and selectively retroreflecting the incident beam back to the detection unit, the retroreflector comprising:
a substantially spherical graded refractive index lens; and
a reflective part for reflecting the incident beam of radiation passing through the lens,
wherein, in use, in a first condition of the retroreflector, the lens and the reflective part are located relative to each other so that the incident beam of radiation is retroreflected back to the detection unit, and in a second condition of the retroreflector, the lens and the reflective part are located relative to each other so that the reflected beam of radiation diverges away from the lens,
said device further comprising a control unit for controlling the condition of the retroreflector.

2. A device according to claim 1, comprising means for moving the lens and the reflective part relative to each other between the first condition and the second condition in response to a control signal received from said control unit.

3. A device according to claim 1 or 2, comprising a user interface connected to said control unit for receiving a control command from a user for controlling the condition of the retroreflector.

4. A device according to any one of the preceding claims, comprising a detector for detecting a characteristic of an incident beam of radiation received by the identification device.

5. A device according to claim 4, comprising a decoder for decoding the characteristic of said incident beam detected by the detector and determining if said characteristic is authentic.

6. A device according to claim 5, wherein the decoder generates an authentication signal if said characteristic is authentic and said control unit responds to said authentication signal by causing said retroreflector to adopt said first condition.

7. A device according to claim 2, wherein said moving means is capable of causing reciprocating relative movement of said lens and said reflective part along a central axis common to said lens and said reflective part.

8. A device according to claim 7, wherein in said first condition said reflective part has a hemi-spherical reflective surface extending along a locus of focal points of said lens.

9. A device according to any one of the preceding claims, wherein in said second condition said reflected beam diverges such that the radiation received by the detection unit is below a predetermined threshold and in said first condition said beam of radiation is retroreflected back to the detection unit such that the radiation received by the detection unit is above the predetermined threshold.

## Patentansprüche

1. Identifizierungsvorrichtung, die einen Rückreflektor umfasst, um ein einfallendes Strahlenbündel von einer von der Vorrichtung entfernten Detektionseinheit zu empfangen und um das einfallende Bündel wahlweise zurück zu der Detektionseinheit zu reflektieren, wobei der Rückreflektor Folgendes umfasst:
eine im Wesentlichen sphärische Linse mit abgestuftem Brechungsindex; und
einen reflektierenden Teil, um das einfallende Strahlenbündel, das sich durch die Linse bewegt, zu reflektieren,
wobei im Gebrauch in einem ersten Zustand des Rückreflektors die Linse und der reflektierende Teil relativ zueinander so angeordnet sind, dass das auftreffende Strahlenbündel zurück zu der Detektionseinheit reflektiert wird, und in einem zweiten Zustand des Rückreflektors die Linse und der reflektierende Teil relativ zueinander so angeordnet sind, dass das reflektierte Strahlenbündel von der Linse weg divergiert,
wobei die Vorrichtung ferner eine Steuereinheit umfasst, um den Zustand des Rückreflektors zu steuern.

2. Vorrichtung nach Anspruch 1, die Mittel umfasst, um die Linse und den reflektierenden Teil relativ zueinander als Reaktion auf ein von der Steuereinheit empfangenes Signal zwischen dem ersten Zustand und dem zweiten Zustand zu bewegen.

3. Vorrichtung nach Anspruch 1 oder 2, die ferner eine Anwenderschnittstelle umfasst, die mit der Steuereinheit verbunden ist, um einen Steuerbefehl von einem Anwender zu empfangen, um den Zustand des Rückreflektors zu steuern.

4. Vorrichtung nach einem der vorhergehenden Ansprüche, die einen Detektor umfasst, um eine Charakteristik eines einfallenden Strahlenbündels, das von der Identifizierungsvorrichtung empfangen wird, zu detektieren.

5. Vorrichtung nach Anspruch 4, die einen Decodierer umfasst, um die Charakteristik des einfallenden Bündels, das von dem Detektor detektiert wird, zu decodieren und zu bestimmen, ob die Charakteristik authentisch ist.

6. Vorrichtung nach Anspruch 5, wobei der Decodierer ein Authentifizierungssignal erzeugt, falls die Charakteristik authentisch ist, und die Steuereinheit auf das Authentifizierungssignal antwortet, indem sie den Rückreflektor dazu veranlasst, den ersten Zustand einzunehmen.

7. Vorrichtung nach Anspruch 2, wobei die Bewegungsmittel die Linse und den reflektierenden Teil zu einer hin und her gehenden Relativbewegung längs einer Mittelachse, die der Linse und dem reflektierenden Teil gemeinsam ist, veranlassen.

8. Vorrichtung nach Anspruch 7, wobei der reflektierende Teil im ersten Zustand eine halbkugelförmige reflektierende Oberfläche besitzt, die sich längs eines geometrischen Orts von Brennpunkten der Linse erstreckt.

9. Vorrichtung nach einem der vorhergehenden Ansprüche, wobei das reflektierte Bündel im zweiten Zustand divergiert, so dass die von der Detektionseinheit empfangene Strahlung unter einem vorgegebenen Schwellenwert liegt, und das Strahlenbündel im ersten Zustand zu der Detektionseinheit zurück reflektiert wird, so dass die von der Detektionseinheit empfangene Strahlung oberhalb des vorgegebenen Schwellenwerts liegt.

## Revendications

1. Dispositif d'identification comprenant un rétro-réflecteur pour recevoir un faisceau de rayonnement incident provenant d'une unité de détection distante du dispositif et pour rétro-réfléchir sélectivement le faisceau incident vers l'unité de détection, lequel rétro-réflecteur comprend :
- une lentille à indice de réfraction gradé essentiellement sphérique ; et
- une partie réfléchissante afin de réfléchir le faisceau de rayonnement incident traversant la lentille ;
- dans lequel, lors de l'utilisation et dans un premier état du rétro-réflecteur, la lentille et la partie réfléchissante sont disposées l'une par rapport à l'autre de sorte que le faisceau de rayonnement incident soit rétro-réfléchi vers l'unité de détection et, dans un second état du rétro-réflecteur, la lentille et la partie réfléchissante sont disposées l'une par rapport à l'autre de sorte que le faisceau de rayonnement réfléchi diverge et s'éloigne de la lentille ;
- lequel dispositif comprend en outre une unité de commande afin de commander l'état du rétro-réflecteur.

2. Dispositif selon la revendication 1, comprenant un moyen pour déplacer la lentille et la partie réfléchissante l'une par rapport à l'autre entre le premier état et le second état en réponse à un signal de commande reçu de l'unité de commande.

3. Dispositif selon la revendication 1 ou la revendication 2, comprenant une interface utilisateur connectée à ladite unité de commande afin de recevoir une instruction de commande d'un utilisateur afin de commander l'état du rétro-réflecteur.

4. Dispositif selon l'une quelconque des revendications précédentes, comprenant un détecteur afin de détecter une caractéristique d'un faisceau de rayonnement incident reçu par le dispositif d'identification.

5. Dispositif selon la revendication 4, comprenant un décodeur afin de décoder la caractéristique dudit faisceau incident détectée par le détecteur, et afin de déterminer si ladite caractéristique est authentique.

6. Dispositif selon la revendication 5, dans lequel le décodeur génère un signal d'authentification si ladite caractéristique est authentique, tandis que ladite unité de commande répond audit signal d'authentification en ordonnant audit rétro-réflecteur d'adopter ledit premier état.

7. Dispositif selon la revendication 2, dans lequel ledit moyen de déplacement peut entraîner un mouvement relatif de va-et-vient de ladite lentille et de ladite partie réfléchissante le long d'un axe central commun à ladite lentille et à ladite partie réfléchissante.

8. Dispositif selon la revendication 7, dans lequel, dans ledit premier état, ladite partie réfléchissante possède une surface réfléchissante hémisphérique s'étendant le long d'un lieu de points focaux de ladite lentille.

9. Dispositif selon l'une quelconque des revendications précédentes, dans lequel, dans ledit second état, ledit faisceau réfléchi diverge de sorte que le rayonnement reçu par l'unité de détection soit en dessous d'un seuil prédéterminé et, dans ledit premier état, ledit faisceau de rayonnement soit rétro-réfléchi vers l'unité de détection de sorte que le rayonnement reçu par l'unité de détection soit au-dessus du seuil prédéterminé.
